# EUROPEAN PATENT SPECIFICATION

(11) **EP 4 117 212 B1**
(45) Date of publication and mention of the grant of the patent: **18.02.2026**
(21) Application number: 20923527.4
(22) Date of filing: 08.04.2020
(51) Int. Cl.: H04L 1/1867, H04L 1/08, H04L 1/00

(54) **DATA BLIND RETRANSMISSION METHOD AND APPARATUS, STORAGE MEDIUM, AND TERMINAL DEVICE**
BLINDES DATENNEUÜBERTRAGUNGSVERFAHREN UND VORRICHTUNG, SPEICHERMEDIUM UND ENDGERÄT
PROCÉDÉ ET APPAREIL DE RETRANSMISSION AVEUGLE DE DONNÉES, SUPPORT DE STOCKAGE ET DISPOSITIF TERMINAL

(30) Priority: 02.03.2020 CN 202010135902
(43) Date of publication of application: 11.01.2023
(73) Proprietor: Huizhou TCL Mobile Communication Co., Ltd, Guangdong 516006 (CN)
(72) Inventor: YIN, Xiaoxue, HuiZhou, Guangdong 516006 (CN); SHENG, Jia, HuiZhou, Guangdong 516006 (CN)
(74) Representative: Murgitroyd & Company
(86) International application number: PCT/CN2020/083684
(87) International publication number: WO 2021/174636

(56) References cited:
- EP-A1- 4 106 242
- WO-A1-2019/004688
- WO-A1-2019/032087
- WO-A2-2018/084608
- CN-A- 110 463 108
- LENOVO ET AL: "Discussion on physical layer procedures for NR sidelink", vol. RAN WG1, no. Reno, USA; 20191118 - 20191122, 8 November 2019 (2019-11-08), XP051819999, Retrieved from the Internet <URL:https://ftp.3gpp.org/tsg_ran/WG1_RL1/TSGR1_99/Docs/R1-1912325.zip R1-1912325.docx> [retrieved on 20191108]
- SONY: "Discussion on mode 2 resource allocation for NR sidelink", 3GPP DRAFT; R1-1910765, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191020, 7 October 2019 (2019-10-07), Mobile Competence Centre ; 650, route des Lucioles ; F-06921 Sophia-Antipolis Cedex ; France, XP051789554

## Description

### FIELD OF THE DISCLOSURE

The present disclosure relates to the field of communication technologies, in particular, to a data blind retransmission method and a terminal.

### BACKGROUND

In the 3rd generation partnership project (3GPP) standard, a direct communication link between device-to-device is called a sidelink. Similar to an uplink and a downlink, there are also control and data channels on the sidelink, the former is called a sidelink control channel (physical sidelink control channel, PSCCH), and the latter is called a sidelink data channel (physical sidelink shared channel, PSSCH). The PSCCH is used to indicate a time-frequency domain resource location of a PSSCH transmission, a modulation and coding mode, and a priority of data carried in the PSSCH. The PSSCH is used to carry data.

In vehicle-to-vehicle/pedestrian/infrastructure/network (v2x), its control information and data can be transmitted through the sidelink, and transmission resources are selected according to a sidelink control information (SCI). In the 3GPP RAN1 #97 meeting, companies have reached an agreement on that for hybrid automatic repeat request (HARQ) feedback based on a distance between two devices in a groupcast multicast, if the distance between the two devices is within communication requirements, the device transmits the HARQ feedback for physical sidelink shared channel (PSSCH), or otherwise, the device may not transmit the HARQ feedback for PSSCH.

Currently, when the distance between the two devices is within the communication requirements, if a receiving end fails to decode the data sent by the transmitting end, the receiving end may feedback HARQ-NACK (non-acknowledgement, decoding failure) to the transmitting end, or otherwise the receiving end may feedback HARQ-ACK (acknowledgement, decoding success). Once the transmitting end receives HARQ-related feedback that fails to decode, a blind retransmission mechanism is activated to repeatedly transmit data to the receiving end. However, when the distance between the two devices is beyond the communication requirements, the two devices usually do not transmit data, resulting in the inability to guarantee quality of service (QoS) performance, and limitations of usage scenarios are strong. EP4106242A1 is a related prior art under Article 54(3) EPC. More particularly, EP4106242A1 discloses that a data transmission method comprises: in the process of triggering a blind retransmission mechanism, regularly acquiring the number of retransmission times; and when the number of retransmission times is less than a preset threshold number of retransmission times, retransmitting data to a receiving terminal, and updating the number of retransmission times. 3GPP DRAFT R1-1912325 is a related prior art for this field. More particularly, 3GPP DRAFT R1-1912325 discloses physical layer procedures for NR sidelink.

### SUMMARY

The invention is set out in the appended set of claims.

### BRIEF DESCRIPTION OF THE DRAWINGS

The technical solutions and other beneficial effects of the present disclosure will be apparent through the detailed description of the specific embodiments of the present disclosure in conjunction with the accompanying drawings.
**FIG.** 1 is a schematic diagram of an application scenario of a data blind retransmission method provided by an embodiment of the present disclosure.
FIG. 2 is a schematic flowchart of a data blind retransmission method provided by an embodiment of the present disclosure.
**FIG.** 3 is another schematic flowchart of a data blind retransmission method provided by an embodiment of the present disclosure.
**FIG.** 4 is a schematic diagram of a running process of a vehicle provided by an embodiment of the present disclosure.
FIG. 5 is a schematic structural diagram of a data blind retransmission apparatus provided by an embodiment of the present disclosure.
**FIG.** 6 is a schematic structural diagram of a terminal device provided by an embodiment of the present disclosure.
FIG. 7 is another schematic structural diagram of a terminal device provided by an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only a part of the embodiments of the present disclosure, but not all of the embodiments. The scope of the invention is defined by the appended claims.

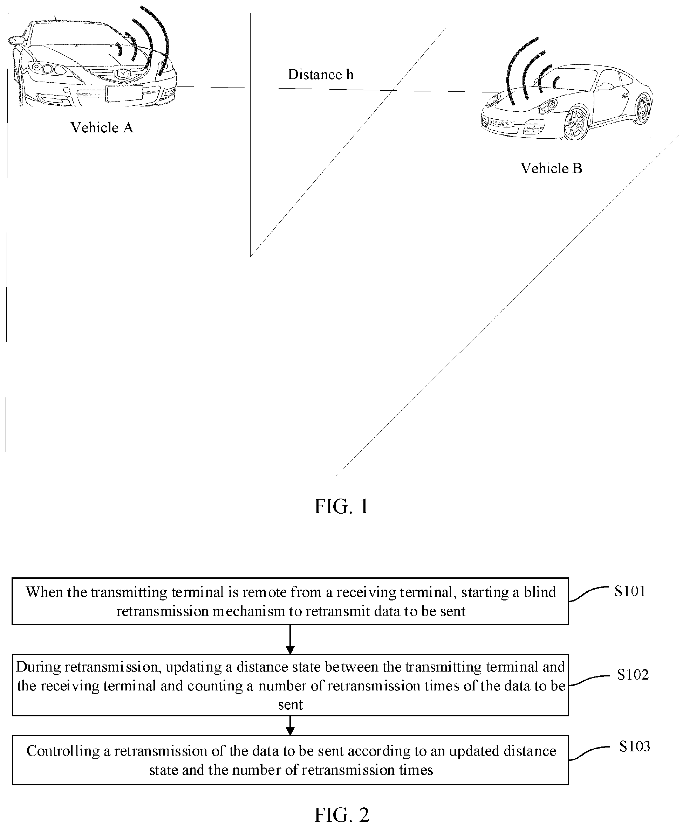

As shown in FIG. 1, FIG. 1 is a schematic diagram of a V2X application scenario provided by an embodiment of the present disclosure. V2X (vehicle to everything, vehicle wireless communication technology) is a new generation of information communication technology that connects the vehicle with everything, where V represents the vehicle and X represents any object that interacts with the vehicle. Currently X mainly includes vehicles, people, traffic roadside infrastructures, and networks. The information modes of V2X interaction include interactions between vehicle to vehicle (V2V), vehicle to infrastructure (V2I), vehicle to pedestrian (V2P), vehicle to network (V2P), and vehicle to network (V2N). In order to satisfy the interactions between the vehicle and various objects, especially the direct communication between two user equipments, a direct communication (sidelink, or translated as side link, sidelink, etc.) mode is introduced. The sidelink communication method implements addressing through source identifiers and destination identifiers of a media access control layer (media access control, MAC). Before transmission, there is no need to pre-connect between user equipments, so as to satisfy a faster and more efficient communication method.

**For** example, in FIG. 1, for vehicle A and vehicle B traveling on the road, when the vehicle A needs to transmit its position, speed, and other related information to the vehicle B, it can transmit the information through PC5 interface. The PC5 interface is an interface defined on the basis of direct communication. When the vehicle B or the vehicle A is moving, a distance h between them is constantly changing.

A data blind retransmission method applied to a transmitting terminal, includes: when the transmitting terminal is remote from a receiving terminal, starting a blind retransmission mechanism to retransmit data to be sent; during retransmission, updating a distance state between the transmitting terminal and the receiving terminal and counting a number of retransmission times of the data to be sent; and controlling a retransmission of the data to be sent according to an updated distance state and the number of retransmission times.

Refer to FIG. 2, FIG. 2 is a schematic flowchart of a data blind transmission method. The data blind retransmission method is applied to a transmitting terminal, such as a vehicle, a notebook computer, a mobile phone, etc. The specific process can be as follows:
S101: When the transmitting terminal is remote from a receiving terminal, starting a blind retransmission mechanism to retransmit data to be sent.

The transmitting terminal can detect a distance between the transmitting terminal and the receiving terminal, or the receiving terminal can detect the distance and report the distance to the transmitting terminal. The long distance state usually means that the distance between the transmitting terminal and the receiving terminal is greater than a communication distance requirement, such as 5m. In this case, the transmitting terminal and the receiving terminal can still communicate, but the communication quality is relatively poor. The blind retransmission mechanism means that no matter whether the data transmission is successful or not, the transmission is repeated according to the defined rules. The common retransmission mechanism may stop retransmission when the data transmission is successful. That is, in the retransmission process of the common retransmission mechanism, once the receiving terminal returns the feedback of decoding success, the data retransmission is stopped. However, as long as the receiving terminal returns the feedback of decoding failure, the transmitting terminal may perform retransmission. The feedback information of decoding failure and decoding success is carried by a physical sidelink control channel (PSCCH). When the receiving terminal fails to decode the corresponding transport block after decoding the relevant PSCCH, it may send a feedback result of the decoding failure to the transmitting terminal. When the receiving terminal can decode the corresponding transport block after decoding the relevant PSCCH, it may send a feedback result of decoding success to the transmitting terminal.

S102: During retransmission, updating a distance state between the transmitting terminal and the receiving terminal and counting a number of retransmission times of the data to be sent.

The above step of "updating the distance state between the transmitting terminal and the receiving terminal" includes:
receiving a sidelink control information sent by the receiving terminal;
decoding the sidelink control information and extracting a parameter value of a preset parameter from a decoded sidelink control information;
**when** the parameter value is equal to a first preset value, using a long distance state as the updated distance state between the transmitting terminal and the receiving terminal; and
**when** the parameter value is equal to a second preset value, using a short distance state as the updated distance state between the transmitting terminal and the receiving terminal.

The preset parameter may be RangInd set manually or configured by a higher layer. The preset parameter is only valid for blind retransmission. The first preset value and the second preset value may be arbitrary values set manually, such as 1 and 0, which are only used to indicate different distance states. Generally, as long as the receiving terminal and the transmitting terminal reach an agreement on a mapping relationship between a specific value of RangInd and the distance state. For example, when RangInd=0, the mapping relationship corresponding to the receiving terminal and the transmitting terminal is in the long distance state.

**It** should be noted that the receiving terminal may report the distance state in real time or periodically. There are two reporting methods: regular reporting and abnormal reporting. The regular reporting means that no matter whether the receiving terminal detects that the distance is outside or within the communication distance, it may report. The abnormal reporting means that the receiving terminal only reports when it detects that the distance is beyond the communication distance.

**For** example, the above step of "counting the number of retransmissions of the data to be sent" specifically includes:
determining whether the data to be sent has completed a single retransmission; and
**if** yes, acquiring the number of retransmission times of the data to be sent in a last count and adding a preset value to the number of retransmission times in the last count.

The preset value may be 1. During retransmission, the number of retransmission times is accumulated, which can be achieved by setting a counter. In an initial state, the value of the counter can be 0, and after each blind retransmission is performed, the counter is incremented by 1.

S103: Controlling a retransmission of the data to be sent according to an updated distance state and the number of retransmission times.

The above step S103 includes:
**when** the updated distance state is a short distance state, turning off the blind retransmission mechanism; and
**when** the updated distance state is a long distance state, determining whether the number of retransmission times is less than a preset maximum number of times; if yes, returning to execute steps of updating the distance state and counting the number of retransmission times of the data to be sent, if no, turning off the blind retransmission mechanism.

The blind retransmission operation may be terminated when the distance between the receiving terminal and the transmitting terminal is switched from the long distance state to the short distance state, or when the number of retransmission times reaches a preset maximum number of times. Only when the distance between the two is in the long distance state and the number of retransmission times is less than the preset maximum number, the blind retransmission may continue.

In addition, when the updated distance state is the short distance state, the data blind retransmission method further incudes:
receiving a hybrid automatic repeat request (HARQ) feedback result sent by the receiving terminal; and
starting the retransmission mechanism according to the HARQ feedback result.

In the short distance state, the normal retransmission mechanism can be started. That is, retransmission is performed based on the feedback of the transmission result. Due to each data transmission, the receiving terminal may send the HARQ feedback result, such as HARQ-ACK (acknowledgement, decoding success) or HARQ-NACK (non-acknowledgement, decoding failure) to the transmitting terminal. Therefore, in this case, data transmission can be performed directly based on the HARQ feedback. For example, when the feedback result is a decoding failure, retransmission is started. When the feedback result is a decoding success, the next data transmission is performed.

In addition, when the updated distance state is the short distance state, the data blind retransmission method further includes:
acquiring the number of retransmission times of the data to be sent in a last count;
updating the number of retransmission times to zero or the preset maximum number of times; and
when the transmitting terminal is remote from the receiving terminal, starting the blind retransmission mechanism based on an updated number of retransmission times.

When the blind retransmission is terminated, the count of the counter can be kept unchanged, cleared, or changed to a preset maximum number of times. After that, in the same transmission process of the data to be sent, if the distance between the receiving terminal and the transmitting terminal is in the long distance state again, the blind retransmission mechanism is started again. In this case, the counter may continue to count the times of the above step S102 with the count of this modification as an initial value.

**It** can be seen from the above that the data blind retransmission method provided in this embodiment, when the transmitting terminal is remote from the receiving terminal, the blind retransmission mechanism is started to retransmit the data to be sent. Then, during retransmission, the distance state between the transmitting terminal and the receiving terminal is updated, and the number of retransmission times of the data to be sent is counted. Then, the retransmission of the data to be sent is controlled according to the updated distance state and the number of retransmission times, such that the blind retransmission mechanism can be flexibly started in combination with the distance and the number of retransmission times. This ensures a communication quality when the two devices are far away, avoids excessive signaling overhead, and has high flexibility.

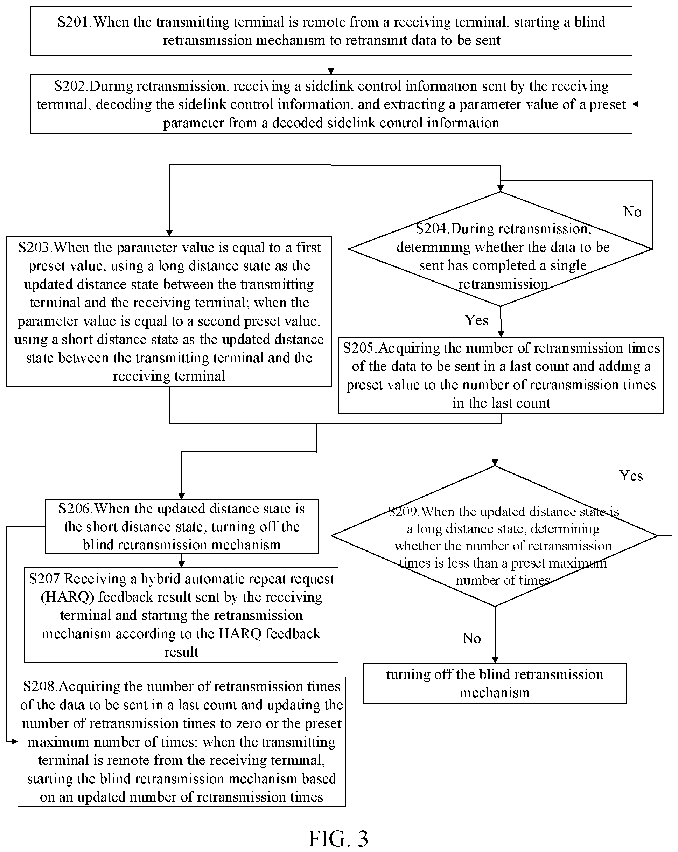

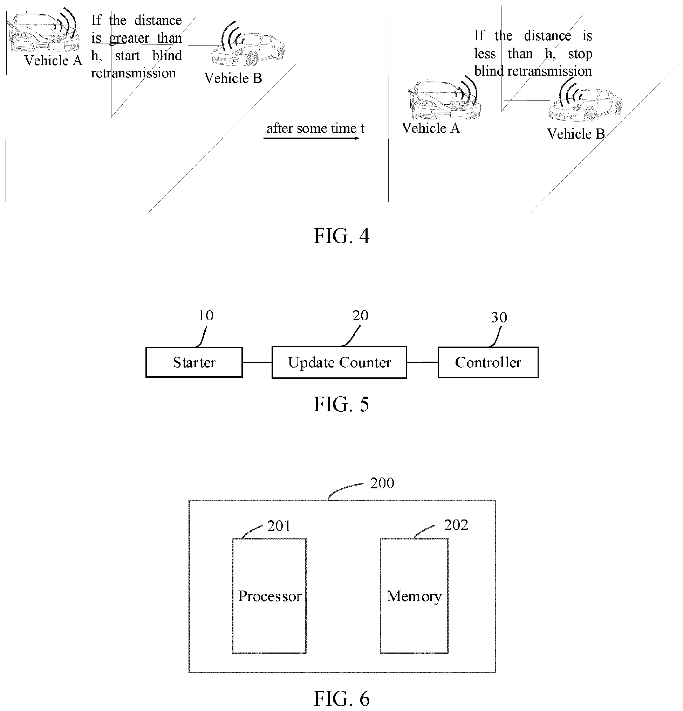

According to the method described in the above embodiment, the present disclosure further provides another data blind retransmission method. As shown in FIG. 3 and FIG. 4, the data blind data retransmission method is applied to a receiving terminal and a transmitting terminal, and the receiving terminal may be a vehicle A, the transmitting terminal may be a vehicle B, and the specific process of the data blind retransmission method can be as follows.

S201: When the transmitting terminal is remote from a receiving terminal, starting a blind retransmission mechanism to retransmit data to be sent.

S202: During retransmission, receiving a sidelink control information sent by the receiving terminal, decoding the sidelink control information, and extracting a parameter value of a preset parameter from a decoded sidelink control information.

S203: When the parameter value is equal to a first preset value, using a long distance state as the updated distance state between the transmitting terminal and the receiving terminal; when the parameter value is equal to a second preset value, using a short distance state as the updated distance state between the transmitting terminal and the receiving terminal.

For example, during the movement of vehicles A and B, when vehicles A and B are separated by h distance, they can be considered to be in a long distance state. In this case, the vehicle A starts the blind retransmission mechanism, the vehicle B detects the distance state between the two in real time, and reports the distance state to the vehicle A.

S204: During retransmission, determining whether the data to be sent has completed a single retransmission; if yes, executing the following step S205, if no, executing the detection again.

S205: Acquiring the number of retransmission times of the data to be sent in a last count and adding a preset value to the number of retransmission times in the last count.

**S206:** When the updated distance state is the short distance state, turning off the blind retransmission mechanism, and performing the following steps S207 and S208.

S207: Receiving a hybrid automatic repeat request (HARQ) feedback result sent by the receiving terminal and starting the retransmission mechanism according to the HARQ feedback result.

S208: Acquiring the number of retransmission times of the data to be sent in a last count and updating the number of retransmission times to zero or the preset maximum number of times; when the transmitting terminal is remote from the receiving terminal, starting the blind retransmission mechanism based on an updated number of retransmission times.

S209: When the updated distance state is a long distance state, determining whether the number of retransmission times is less than a preset maximum number of times; if yes, returning to execute the steps S202 to S206, if no, turning off the blind retransmission mechanism.

For example, in the blind retransmission process, a vehicle B may detect a distance between the two. If the distance between the vehicle A and the vehicle B is less than h after a period of time t, the sidelink control information with RangInd=1 is reported to vehicle A. The vehicle A determines that the two are in a short distance state according to the value of 1. In this case, blind retransmission needs to be turned off, and the counted number of retransmission times remains unchanged or becomes zero or a preset maximum number m. If the distance between the vehicle A and the vehicle B is still greater than or equal to h, and the number of retransmission times is less than m, continue blind retransmission, otherwise blind retransmission is disabled.

According to the method described in the foregoing embodiment, this embodiment will be further described from the perspective of a data blind retransmission apparatus. The data blind retransmission apparatus may be specifically implemented as an independent entity.

Refer to FIG. 5, FIG. 5 specifically describes a data blind retransmission apparatus provided by the embodiment of the present disclosure, which is applied to a transmitting terminal, such as a vehicle, a notebook computer, a mobile phone, etc., and the data blind retransmission apparatus may include a starter 10, an update counter 20, and a controller module 30.

### (1) Starter 10:

The starter 10 is configured to start a blind retransmission mechanism to retransmit data to be sent when the transmitting terminal is remote from a receiving terminal.

The transmitting terminal can detect a distance between the transmitting terminal and the receiving terminal, or the receiving terminal can detect the distance and report the distance to the transmitting terminal. The long distance state usually means that the distance between the transmitting terminal and the receiving terminal is greater than a communication distance requirement, such as 5m. In this case, the transmitting terminal and the receiving terminal can still communicate, but the communication quality is relatively poor. The blind retransmission mechanism means that no matter whether the data transmission is successful or not, the transmission is repeated according to the defined rules. The common retransmission mechanism may stop retransmission when the data transmission is successful. That is, in the retransmission process of the common retransmission mechanism, once the receiving terminal returns the feedback of decoding success, the data retransmission is stopped. However, as long as the receiving terminal returns the feedback of decoding failure, the transmitting terminal may perform retransmission. The feedback information of decoding failure and decoding success is carried by a physical sidelink control channel (PSCCH). When the receiving terminal fails to decode the corresponding transport block after decoding the relevant PSCCH, it may send a feedback result of the decoding failure to the transmitting terminal. When the receiving terminal can decode the corresponding transport block after decoding the relevant PSCCH, it may send a feedback result of decoding success to the transmitting terminal.

### (2) Update counter 20:

The update counter 20 is configured to update a distance state between the transmitting terminal and the receiving terminal and count a number of retransmission times of the data to be sent during retransmission.

**For** example, the update counter 20 is further configured to:
**receive** a sidelink control information sent by the receiving terminal;
**decode** the sidelink control information and extract a parameter value of a preset parameter from a decoded sidelink control information;
**when** the parameter value is equal to a first preset value, using a long distance state as the updated distance state between the transmitting terminal and the receiving terminal; and
**when** the parameter value is equal to a second preset value, using a short distance state as the updated distance state between the transmitting terminal and the receiving terminal.

The preset parameter may be RangInd set manually or configured by a higher layer. The preset parameter is only valid for blind retransmission. The first preset value and the second preset value may be arbitrary values set manually, such as 1 and 0, which are only used to indicate different distance states. Generally, as long as the receiving terminal and the transmitting terminal reach an agreement on a mapping relationship between a specific value of RangInd and the distance state. For example, when RangInd=0, the mapping relationship corresponding to the receiving terminal and the transmitting terminal is in the long distance state.

**It** should be noted that the receiving terminal may report the distance state in real time or periodically. There are two reporting methods: regular reporting and abnormal reporting. The regular reporting means that no matter whether the receiving terminal detects that the distance is outside or within the communication distance, it may report. The abnormal reporting means that the receiving terminal only reports when it detects that the distance is beyond the communication distance.

**For** example, the update counter 20 is further configured to:
determine whether the data to be sent has completed a single retransmission; and
**if** yes, acquire the number of retransmission times of the data to be sent in a last count and add a preset value to the number of retransmission times in the last count.

The preset value may be 1. During retransmission, the number of retransmission times is accumulated, which can be achieved by setting a counter. In an initial state, the value of the counter can be 0, and after each blind retransmission is performed, the counter is incremented by 1.

### (3) Controller 30:

The controller 30 is configured to control a retransmission of the data to be sent according to an updated distance state and the number of retransmission times.

**The** controller 30 is further configured to:
**turn** off the blind retransmission mechanism when the updated distance state is a short distance state; and
determine whether the number of retransmission times is less than a preset maximum number of times when the updated distance state is a long distance state; if yes, return to execute steps of updating the distance state and count the number of retransmission times of the data to be sent, if no, turn off the blind retransmission mechanism.

The blind retransmission operation may be terminated when the distance between the receiving terminal and the transmitting terminal is switched from the long distance state to the short distance state, or when the number of retransmission times reaches a preset maximum number of times. Only when the distance between the two is in the long distance state and the number of retransmission times is less than the preset maximum number, the blind retransmission may continue.

In addition, when the updated distance state is the short distance state, the controller 30 is further configured to:
receive a hybrid automatic repeat request (HARQ) feedback result sent by the receiving terminal; and
start the retransmission mechanism according to the HARQ feedback result.

In the short distance state, the normal retransmission mechanism can be started. That is, retransmission is performed based on the feedback of the transmission result. Due to each data transmission, the receiving terminal may send the HARQ feedback result, such as HARQ-ACK (acknowledgement, decoding success) or HARQ-NACK (non-acknowledgement, decoding failure) to the transmitting terminal. Therefore, in this case, data transmission can be performed directly based on the HARQ feedback. For example, when the feedback result is a decoding failure, retransmission is started. When the feedback result is a decoding success, the next data transmission is performed.

In addition, when the updated distance state is the short distance state, the controller 30 is further configured to:
acquire the number of retransmission times of the data to be sent in a last count;
update the number of retransmission times to zero or the preset maximum number of times; and
when the transmitting terminal is remote from the receiving terminal, starting the blind retransmission mechanism based on an updated number of retransmission times.

When the blind retransmission is terminated, the count of the counter can be kept unchanged, cleared, or changed to a preset maximum number of times. After that, in the same transmission process of the data to be sent, if the distance between the receiving terminal and the transmitting terminal is in the long distance state again, the blind retransmission mechanism is started again. In this case, the counter may continue to count the times of the above step S102 with the count of this modification as an initial value.

During specific implementation, the above units may be implemented as independent entities, or may be combined arbitrarily to be implemented as the same or several entities. For the specific implementation of the above units, reference may be made to the foregoing method embodiments, and details are not described herein again.

**It** can be seen from the above that the data blind retransmission apparatus provided in this embodiment, when the transmitting terminal is remote from the receiving terminal, the starter 10 starts the blind retransmission mechanism to retransmit the data to be sent. Then, during retransmission, the update counter updates the distance state between the transmitting terminal and the receiving terminal and counts the number of retransmission times of the data to be sent. The controller 30 controls the retransmission of the data to be sent according to the updated distance state and the number of retransmission times, such that the blind retransmission mechanism can be flexibly started in combination with the distance and the number of retransmission times. This ensures a communication quality when the two devices are far away, avoids excessive signaling overhead, and has high flexibility.

In addition, an embodiment of the present disclosure further provides a terminal device, where the terminal device may be a smart phone, a smart vehicle, or other devices. As shown in FIG. 6, the terminal device 200 includes a processor 201 and a memory 202. The processor 201 is electrically connected to the memory 202.

The processor 201 is a control center of the terminal device. The processor 201 connects various parts of the entire terminal device by using various interfaces and lines and performs various functions and data processing of the terminal device by running or executing the software program and/or the application module that are/is stored in the memory 202 and by invoking data stored in the memory 202, so as to perform overall monitoring on the terminal device.

In this embodiment, the processor 201 in the terminal device 200 loads the instructions corresponding to the processes of one or more application programs into the memory 202 according to the following steps, and the processor 201 runs the application program stored in the memory 202, thereby realizing various functions:
when the transmitting terminal is remote from a receiving terminal, starting a blind retransmission mechanism to retransmit data to be sent;
during retransmission, updating a distance state between the transmitting terminal and the receiving terminal and counting a number of retransmission times of the data to be sent; and
controlling a retransmission of the data to be sent according to an updated distance state and the number of retransmission times.

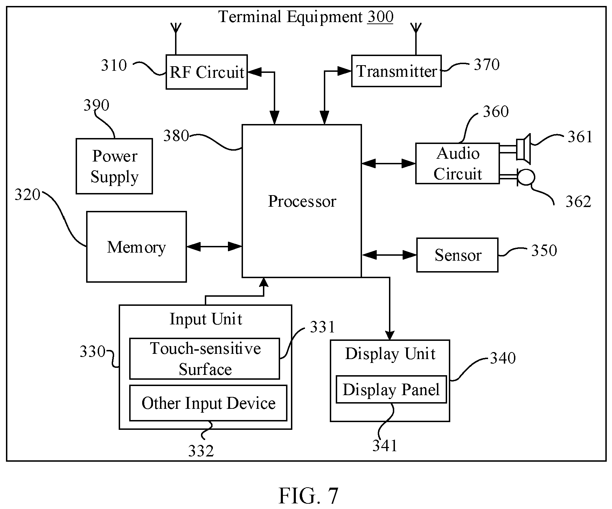

FIG. 7 shows a specific structural block diagram of a terminal device provided by an embodiment of the present disclosure, and the terminal device may be used to implement the data blind retransmission method provided in the foregoing embodiment. The terminal device 300 may be a smart phone, a tablet computer, or a vehicle-mounted device.

A radio frequency (RF) circuit 310 is configured to receive and transmit electromagnetic waves and realize the mutual conversion of the electromagnetic wave and the electric signal, thereby communicating with the communication network or other equipment. The RF circuit 110 may include various existing circuit elements for performing these functions, such as antennas, radio frequency transceivers, digital signal processors, encryption/decryption chips, subscriber identity modules (SIM) cards, and memories. The RF circuit 110 may communicate with various networks such as the Internet, an intranet, a wireless network, or communicate with other devices over a wireless network. The above-mentioned wireless network may include a cellular telephone network, a wireless local area network or a metropolitan area network. The above-mentioned wireless networks may use various communication standards, protocols and techniques including, but not limited to, global system for mobile communication (GSM), enhanced data GSM environment (EDGE), wideband code division multiple access (W-CDMA), code division access (CDMA), time division multiple access (TDMA), Bluetooth, wireless fidelity (Wi-Fi) (such as American institute of electrical and electronics engineers standards IEEE 802.11a, IEEE 802.11b, IEEE802.11g and/or IEEE 802.11n), Voice over internet protocol (VoIP), worldwide interoperability for microwave access (Wi-Max), other protocols for mail, instant messaging and short messaging, as well as any other suitable communication protocols, and even those that are not yet developed.

The memory 320 may be configured to store a software instructions and module. The processor 380 runs the software instructions and module stored in the memory 320, to implement various functional applications and data processing. The memory 320 may mainly include a program storage area and a data storage area. The program storage area may store an operating system, an application program required by at least one function (such as a sound playback function and an image display function), and the like. The data storage area may store data (such as audio data and an address book) created according to use of the mobile terminal, and the like. In addition, the memory 320 may include a high speed random access memory, and may also include a non-volatile memory, such as at least one magnetic disk memory, a flash memory device, or another volatile solid-state memory. Correspondingly, the memory 320 may further include a memory controller, so that the processor 380 and the input unit 330 access the memory 320.

The input unit 330 may be configured to receive input digit or character information, and generate keyboard, mouse, joystick, optical, or track ball signal input related to the user setting and function control. Specifically, the input unit 330 may include a touch-sensitive surface 331 and other input device 332. The touch-sensitive surface 331 may also be referred to as a touch screen or a touch panel and may collect a touch operation of a user on or near the touch-sensitive surface (such as an operation of a user on or near the touch-sensitive surface by using any suitable object or attachment, such as a finger or a stylus), and drive a corresponding connection apparatus according to a preset program. Optionally, the touch-sensitive surface may include two parts: a touch detection apparatus and a touch controller. The touch detection apparatus detects a touch position of the user, detects a signal generated by the touch operation, and transfers the signal to the touch controller. The touch controller receives the touch information from the touch detection apparatus, converts the touch information into touch point coordinates, and sends the touch point coordinates to the processor 380. Moreover, the touch controller can receive and execute a command sent from the processor 380. In addition, the touch-sensitive surface may be implemented by using various types, such as a resistive type, a capacitance type, an infrared type, and a surface sound wave type. In addition to the touch-sensitive surface, the input unit 330 may further include the another input device. Specifically, the another input device may include, but is not limited to, one or more of a physical keyboard, a functional key (such as a volume control key or a switch key), a track ball, a mouse, and a joystick.

The display unit 340 may be configured to display information input by the user or information provided for the user, and various graphical user ports of the mobile terminal. The graphical user ports may be formed by a graph, a text, an icon, a video, and any combination thereof. The display unit 340 may include a display panel 341. Optionally, the display panel may be configured by using a liquid crystal display (LCD), an organic light-emitting diode (OLED), or the like. Further, the touch-sensitive surface may cover the display panel. After detecting a touch operation on or near the touch-sensitive surface, the touch-sensitive surface transfers the touch operation to the processor 380, so as to determine a type of a touch event. Then, the processor 380 provides corresponding visual output on the display panel according to the type of the touch event. Although, in FIG. 4, the touch-sensitive surface and the display panel are used as two separate parts to implement input and output functions, in some embodiments, the touch-sensitive surface and the display panel may be integrated to implement the input and output functions.

The terminal equipment 300 may further include at least one sensor 350, such as an optical sensor, a motion sensor, and other sensors. Specifically, the optical sensor may include an ambient light sensor and a proximity sensor. The ambient light sensor may adjust luminance of the display panel 341 according to brightness of the ambient light. The proximity sensor may switch off the display panel 341 and/or backlight when the terminal equipment 300 is moved to the ear. As one type of motion sensor, a gravity acceleration sensor may detect magnitude of accelerations at various directions (which generally are triaxial), may detect magnitude and a direction of the gravity when static, and may be configured to identify an application of a mobile phone attitude (such as switching between horizontal and vertical screens, a related game, and attitude calibration of a magnetometer), a related function of vibration identification (such as a pedometer and a knock). Other sensors, such as a gyroscope, a barometer, a hygrometer, a thermometer, and an infrared sensor, which may be configured in the terminal equipment 300 are not further described herein.

**The** audio circuit 360, a loudspeaker 361, and a microphone 362 may provide audio interfaces between the user and the terminal equipment 300. The audio circuit 360 can transmit, to the loudspeaker 361, a received electric signal converted from received audio data. The loudspeaker 361 converts the electric signal into a sound signal for output. On the other hand, the microphone 362 converts a collected sound signal into an electric signal. The audio circuit 360 receives the electric signal and converts the electric signal into audio data, and outputs the audio data to the processor 380 for processing. Then, the processor 380 sends the audio data to, for example, another terminal by using the RF circuit 310, or outputs the audio data to the memory 320 for further processing. The audio circuit 360 may further include an earplug jack, so as to provide communication between a peripheral earphone and the terminal equipment 300.

The terminal equipment 300 may help, by using the transmitter 370 (e.g., Wi-Fi module), a user to receive and send an e-mail, browse a webpage, and access stream media, and the like, which provides wireless broadband Internet access for the user. Although FIG. 5 shows the transmitter 370, it may be understood that the wireless communications unit is not a necessary component of the terminal equipment 300 and can be ignored according to demands without changing the scope of the essence of the present disclosure.

The processor 380 is a control center of the terminal equipment 300 and connects various parts of the terminal by using various interfaces and lines. By running or executing the software instructions and/or module stored in the memory 320, and invoking data stored in the memory 320, the processor 380 performs various functions and data processing of the terminal equipment 300, thereby performing overall monitoring on the mobile phone. Optionally, the processor 380 may include one or more processing cores. Preferably, the processor 380 may integrate an application processor and a modem. The application processor mainly processes an operating system, a user interface, an application program, and the like. The modem mainly processes wireless communication. It may be understood that the foregoing modem may not be integrated into the processor 380.

The terminal equipment 300 further includes the power supply 390 (such as a battery) for supplying power to the components. Preferably, the power supply may be logically connected to the processor 380 by using a power supply management system, thereby implementing functions, such as charging, discharging, and power consumption management, by using the power supply management system. The power supply 390 may further include any component, such as one or more direct current or alternate current power supplies, a recharging system, a power supply fault detection circuit, a power supply converter or an inverter, and a power supply state indicator.

The terminal equipment 300 could further comprise a camera (not shown), such as a front camera and a back camera, and a Bluetooth module (not shown) and further details are omitted. In this embodiment, the display unit of the terminal equipment is a touch panel. The terminal equipment further comprises a memory and one or more software instructions. The one or more software instructions are stored in the memory. One or more processors could execute the one or more software instructions to perform operations comprising:
when the transmitting terminal is remote from a receiving terminal, starting a blind retransmission mechanism to retransmit data to be sent;
during retransmission, updating a distance state between the transmitting terminal and the receiving terminal and counting a number of retransmission times of the data to be sent; and
controlling a retransmission of the data to be sent according to an updated distance state and the number of retransmission times.

**In** the actual implementation, each module could be implemented as an independent entity or multiple modules could be combined into one or more entities. The implementation of each module could be referred to the above-mentioned embodiments and further details are omitted here.

**A** person having ordinary skill in the art could understand that part of all the steps in the above-mentioned method could be completed through instructions or executing instruction to control related hardware. The instructions could be stored in a computer readable medium and loaded by a processor to execute. Accordingly, a storage medium is disclosed according to an embodiment of the present disclosure. The storage medium stores multiple instructions, which could be loaded and executed by a processor to perform any of the steps of any of the above-mentioned data blind retransmission methods.

The storage medium may include a read only memory (ROM), a random access memory (RAM), a magnetic disc or a compact disc.

Because the instructions stored in the storage medium could be executed to perform any of the steps of any of the above-mentioned data blind retransmission methods. Accordingly, the objectives of any of the above-mentioned data blind retransmission methods could be achieved. Since these operations and implementations had been discussed above, further details are omitted here.

The implementation of all the above operations/steps had been discussed in the above embodiments and thus further details are omitted here.

Above are embodiments of the present disclosure, which does not limit the scope of the present disclosure.

## Claims

1. A data blind retransmission method performed by a transmitting terminal, comprising:
when the transmitting terminal is remote from a receiving terminal, starting a blind retransmission mechanism to retransmit data to be sent (S101);
during retransmission, updating a distance state between the transmitting terminal and the receiving terminal and counting a number of retransmission times of the data to be sent (S102); and
controlling a retransmission of the data to be sent according to an updated distance state and the number of retransmission times (S103);
wherein controlling the retransmission of the data to be sent according to the updated distance state and the number of retransmission times (S103) comprises:
when the updated distance state is a short distance state, turning off the blind retransmission mechanism (S206); and
when the updated distance state is a long distance state, determining whether the number of retransmission times is less than a preset maximum number of times (S209); if yes, returning to execute steps of updating the distance state and counting the number of retransmission times of the data to be sent (S102), if no, turning off the blind retransmission mechanism;
wherein updating the distance state between the transmitting terminal and the receiving terminal (S102) comprises:
receiving a sidelink control information sent by the receiving terminal (S202);
decoding the sidelink control information and extracting a parameter value of a preset parameter from a decoded sidelink control information (S202);
when the parameter value is equal to a first preset value, using a long distance state as the updated distance state between the transmitting terminal and the receiving terminal (S203); and
when the parameter value is equal to a second preset value, using a short distance state as the updated distance state between the transmitting terminal and the receiving terminal (S203).

2. The data blind retransmission method of claim 1, **characterized in that** when the updated distance state is the short distance state, the data blind retransmission method (S206) further comprises:
receiving a hybrid automatic repeat request, HARQ, feedback result sent by the receiving terminal (S207); and
starting the retransmission mechanism according to the HARQ feedback result (S207).

3. The data blind retransmission method of claim 2, **characterized in that** starting the retransmission mechanism according to the HARQ feedback result (S207) comprises:
when the HARQ feedback result is a decoding failure, starting the retransmission mechanism; and
when the HARQ feedback result is a decoding success, performing a next data transmission.

4. The data blind retransmission method of claim 1, **characterized in that** when the updated distance state is the short distance state, the data blind retransmission method (S206) further comprises:
acquiring the number of retransmission times of the data to be sent in a last count (S208);
updating the number of retransmission times to zero or the preset maximum number of times (S208); and
when the transmitting terminal is remote from the receiving terminal, starting the blind retransmission mechanism based on an updated number of retransmission times (S208).

5. The data blind retransmission method of claim 1, **characterized in that** counting the number of retransmission times of the data to be sent (S102) comprises:
determining whether the data to be sent has completed a single retransmission (S204); and
if yes, acquiring the number of retransmission times of the data to be sent in a last count and adding a preset value to the number of retransmission times in the last count (S205).

6. A terminal (200), comprising:
a processor (201); and
a memory (202) electrically connected to the processor (201) and configured to store instructions and data;
wherein the processor (201) is configured to perform operations comprising:
when the transmitting terminal is remote from a receiving terminal, starting a blind retransmission mechanism to retransmit data to be sent (S101);
during retransmission, updating a distance state between the transmitting terminal and the receiving terminal and counting a number of retransmission times of the data to be sent (S102); and
controlling a retransmission of the data to be sent according to an updated distance state and the number of retransmission times (S103);
wherein the processor (201) is configured to perform:
when the updated distance state is a short distance state, turning off the blind retransmission mechanism (S206); and
when the updated distance state is a long distance state, determining whether the number of retransmission times is less than a preset maximum number of times (S209); if yes, returning to execute steps of updating the distance state and counting the number of retransmission times of the data to be sent (S102), if no, turning off the blind retransmission mechanism;
wherein the processor (201) is configured to perform:
receiving a sidelink control information sent by the receiving terminal (S202);
decoding the sidelink control information and extracting a parameter value of a preset parameter from a decoded sidelink control information (S202);
when the parameter value is equal to a first preset value, using a long distance state as the updated distance state between the transmitting terminal and the receiving terminal (S203); and
when the parameter value is equal to a second preset value, using a short distance state as the updated distance state between the transmitting terminal and the receiving terminal (S203).

7. The terminal of claim 6, **characterized in that** when the updated distance state is the short distance state, the processor (201) is configured to perform:
receiving a hybrid automatic repeat request, HARQ, feedback result sent by the receiving terminal (S207); and
starting the retransmission mechanism according to the HARQ feedback result (S207).

8. The terminal of claim 6, **characterized in that** when the updated distance state is the short distance state, the processor (201) is configured to perform:
acquiring the number of retransmission times of the data to be sent in a last count (S208);
updating the number of retransmission times to zero or the preset maximum number of times (S208); and
when the transmitting terminal is remote from the receiving terminal, starting the blind retransmission mechanism based on an updated number of retransmission times (S208).

9. The terminal of claim 6, **characterized in that** the processor (201) is configured to perform:
determining whether the data to be sent has completed a single retransmission (S204); and
if yes, acquiring the number of retransmission times of the data to be sent in a last count, and adding a preset value to the number of retransmission times in the last count (S205).

## Patentansprüche

1. Ein Daten-Blind-Wiederübertragungsverfahren, ausgeführt von einem Übertragungsendgerät, umfassend:
wenn das Übertragungsendgerät von einem empfangenden Endgerät räumlich entfernt ist, Starten eines Blind-Wiederübertragungsmechanismus zum Wiederübertragen von zu sendenden Daten (S101);
während der Wiederübertragung, Aktualisieren eines Distanzzustands zwischen dem Übertragungsendgerät und dem empfangenden Endgerät sowie Zählen einer Anzahl von Wiederübertragungszeiten der zu sendenden Daten (S102); und
Steuern einer Wiederübertragung der zu sendenden Daten gemäß einem aktualisierten Distanzzustand und der Anzahl der Wiederübertragungszeiten (S103);
wobei das Steuern der Wiederübertragung der zu sendenden Daten gemäß dem aktualisierten Distanzzustand und der Anzahl der Wiederübertragungszeiten (S103) Folgendes umfasst:
wenn der aktualisierte Distanzzustand ein Kurzdistanzzustand ist, Ausschalten des Blind-Wiederübertragungsmechanismus (S206); und
wenn der aktualisierte Distanzzustand ein Langdistanzzustand ist, Bestimmen, ob die Anzahl der Wiederübertragungszeiten kleiner ist als eine vorgegebene maximale Anzahl von Zeiten (S209);
falls ja, Zurückkehren zur Ausführung der Schritte des Aktualisierens des Distanzzustands und des Zählens der Anzahl der Wiederübertragungszeiten der zu sendenden Daten (S102);
falls nein, Ausschalten des Blind-Wiederübertragungsmechanismus;
wobei das Aktualisieren des Distanzzustands zwischen dem Übertragungsendgerät und dem empfangenden Endgerät (S102) Folgendes umfasst:
Empfangen einer von dem empfangenden Endgerät gesendeten Sidelink-Steuerinformation (S202);
Dekodieren der Sidelink-Steuerinformation und Extrahieren eines Parameterwerts eines vorgegebenen Parameters aus einer dekodierten Sidelink-Steuerinformation (S202);
wenn der Parameterwert gleich einem ersten vorgegebenen Wert ist, Verwenden eines Langdistanzzustands als aktualisierten Distanzzustand zwischen dem Übertragungsendgerät und dem empfangenden Endgerät (S203); und
wenn der Parameterwert gleich einem zweiten vorgegebenen Wert ist, Verwenden eines Kurzdistanzzustands als aktualisierten Distanzzustand zwischen dem Übertragungsendgerät und dem empfangenden Endgerät (S203).

2. Daten-Blind-Wiederübertragungsverfahren nach Anspruch 1, **dadurch gekennzeichnet, dass**, wenn der aktualisierte Distanzzustand der Kurzdistanzzustand ist, das Daten-Blind-Wiederübertragungsverfahren (S206) ferner Folgendes umfasst:
Empfangen eines von dem empfangenden Endgerät gesendeten Hybrid-Automatic-Repeat-Request-HARQ-Feedback-Ergebnisses (S207); und
Starten des Wiederübertragungsmechanismus gemäß dem HARQ-Feedback-Ergebnis (S207).

3. Daten-Blind-Wiederübertragungsverfahren nach Anspruch 2, **dadurch gekennzeichnet, dass** das Starten des Wiederübertragungsmechanismus gemäß dem HARQ-Feedback-Ergebnis (S207) Folgendes umfasst:
wenn das HARQ-Feedback-Ergebnis ein Dekodierungsfehlschlag ist, Starten des Wiederübertragungsmechanismus; und
wenn das HARQ-Feedback-Ergebnis ein Dekodierungserfolg ist, Durchführen einer nächsten Datenübertragung.

4. Daten-Blind-Wiederübertragungsverfahren nach Anspruch 1, **dadurch gekennzeichnet, dass**, wenn der aktualisierte Distanzzustand der Kurzdistanzzustand ist, das Daten-Blind-Wiederübertragungsverfahren (S206) ferner Folgendes umfasst:
Erfassen der Anzahl der Wiederübertragungszeiten der zu sendenden Daten in einer letzten Zählung (S208);
Aktualisieren der Anzahl der Wiederübertragungszeiten auf null oder auf eine vorgegebene maximale Anzahl von Zeiten (S208); und
wenn das Übertragungsendgerät von dem empfangenden Endgerät räumlich entfernt ist, Starten des Blind-Wiederübertragungsmechanismus auf Grundlage der aktualisierten Anzahl der Wiederübertragungszeiten (S208).

5. Daten-Blind-Wiederübertragungsverfahren nach Anspruch 1, **dadurch gekennzeichnet, dass** das Zählen der Anzahl der Wiederübertragungszeiten der zu sendenden Daten (S102) Folgendes umfasst:
Bestimmen, ob die zu sendenden Daten eine einzelne Wiederübertragung abgeschlossen haben (S204); und
falls ja, Erfassen der Anzahl der Wiederübertragungszeiten der zu sendenden Daten in einer letzten Zählung und Hinzufügen eines vorgegebenen Wertes zur Anzahl der Wiederübertragungszeiten in der letzten Zählung (S205).

6. Endgerät (200), umfassend:
einen Prozessor (201); und
einen Speicher (202), der elektrisch mit dem Prozessor (201) verbunden ist und dazu ausgebildet ist, Anweisungen und Daten zu speichern;
wobei der Prozessor (201) dazu ausgebildet ist, Operationen auszuführen, die Folgendes umfassen:
wenn das Übertragungsendgerät von einem empfangenden Endgerät räumlich entfernt ist, Starten eines Blind-Wiederübertragungsmechanismus zum Wiederübertragen von zu sendenden Daten (S101);
während der Wiederübertragung, Aktualisieren eines Distanzzustands zwischen dem Übertragungsendgerät und dem empfangenden Endgerät sowie Zählen einer Anzahl von Wiederübertragungszeiten der zu sendenden Daten (S102); und
Steuern einer Wiederübertragung der zu sendenden Daten gemäß einem aktualisierten Distanzzustand und der Anzahl der Wiederübertragungszeiten (S103);
wobei der Prozessor (201) ferner dazu ausgebildet ist, Folgendes auszuführen:
wenn der aktualisierte Distanzzustand ein Kurzdistanzzustand ist, Ausschalten des Blind-Wiederübertragungsmechanismus (S206); und
wenn der aktualisierte Distanzzustand ein Langdistanzzustand ist, Bestimmen, ob die Anzahl der Wiederübertragungszeiten kleiner ist als eine vorgegebene maximale Anzahl von Zeiten (S209);
falls ja, Zurückkehren zur Ausführung der Schritte des Aktualisierens des Distanzzustands und des Zählens der Anzahl der Wiederübertragungszeiten der zu sendenden Daten (S102);
falls nein, Ausschalten des Blind-Wiederübertragungsmechanismus;
wobei der Prozessor (201) ferner dazu ausgebildet ist, Folgendes auszuführen:
Empfangen einer von dem empfangenden Endgerät gesendeten Sidelink-Steuerinformation (S202);
Dekodieren der Sidelink-Steuerinformation und Extrahieren eines Parameterwerts eines vorgegebenen Parameters aus einer dekodierten Sidelink-Steuerinformation (S202);
wenn der Parameterwert gleich einem ersten vorgegebenen Wert ist, Verwenden eines Langdistanzzustands als aktualisierten Distanzzustand zwischen dem Übertragungsendgerät und dem empfangenden Endgerät (S203); und
wenn der Parameterwert gleich einem zweiten vorgegebenen Wert ist, Verwenden eines Kurzdistanzzustands als aktualisierten Distanzzustand zwischen dem Übertragungsendgerät und dem empfangenden Endgerät (S203).

7. Endgerät nach Anspruch 6, **dadurch gekennzeichnet, dass**, wenn der aktualisierte Distanzzustand der Kurzdistanzzustand ist, der Prozessor (201) dazu ausgebildet ist, Folgendes auszuführen:
Empfangen eines von dem empfangenden Endgerät gesendeten Hybrid-Automatic-Repeat-Request-HARQ-Feedback-Ergebnisses (S207); und
Starten des Wiederübertragungsmechanismus gemäß dem HARQ-Feedback-Ergebnis (S207).

8. Endgerät nach Anspruch 6, **dadurch gekennzeichnet, dass**, wenn der aktualisierte Distanzzustand der Kurzdistanzzustand ist, der Prozessor (201) dazu ausgebildet ist, Folgendes auszuführen:
Erfassen der Anzahl der Wiederübertragungszeiten der zu sendenden Daten in einer letzten Zählung (S208);
Aktualisieren der Anzahl der Wiederübertragungszeiten auf null oder auf eine vorgegebene maximale Anzahl von Zeiten (S208); und
wenn das Übertragungsendgerät von dem empfangenden Endgerät räumlich entfernt ist, Starten des Blind-Wiederübertragungsmechanismus auf Grundlage der aktualisierten Anzahl der Wiederübertragungszeiten (S208).

9. Endgerät nach Anspruch 6, **dadurch gekennzeichnet, dass** der Prozessor (201) dazu ausgebildet ist, Folgendes auszuführen:
Bestimmen, ob die zu sendenden Daten eine einzelne Wiederübertragung abgeschlossen haben (S204); und
falls ja, Erfassen der Anzahl der Wiederübertragungszeiten der zu sendenden Daten in einer letzten Zählung und Hinzufügen eines vorgegebenen Wertes zur Anzahl der Wiederübertragungszeiten in der letzten Zählung (S205).

## Revendications

1. Un procédé de retransmission aveugle de données réalisé par un terminal transmetteur, comprenant :
lorsque le terminal transmetteur est distant d'un terminal récepteur, le démarrage d'un mécanisme de retransmission aveugle pour retransmettre des données à envoyer (S101) ;
pendant la retransmission, la mise à jour d'un état de distance entre le terminal transmetteur et le terminal récepteur et le comptage d'un nombre d'occurrences de retransmission des données à envoyer (S102) ; et
la commande d'une retransmission des données à envoyer selon un état de distance mis à jour et le nombre d'occurrences de retransmission (S103) ;
dans lequel la commande de la retransmission des données à envoyer selon l'état de distance mis à jour et le nombre d'occurrences de retransmission (S103) comprend : lorsque l'état de distance mis à jour est un état de courte distance, la désactivation du mécanisme de retransmission aveugle (S206) ; et
lorsque l'état de distance mis à jour est un état de longue distance, la détermination de si le nombre d'occurrences de retransmission est inférieur à un nombre maximal prédéfini d'occurrences (S209) ; si oui, le retour à l'exécution des étapes de mise à jour de l'état de distance et de comptage du nombre d'occurrences de retransmission des données à envoyer (S102), si non, la désactivation du mécanisme de retransmission aveugle ;
dans lequel la mise à jour de l'état de distance entre le terminal transmetteur et le terminal récepteur (S102) comprend :
la réception d'une information de commande de liaison latérale envoyée par le terminal récepteur (S202) ;
le décodage de l'information de commande de liaison latérale et l'extraction d'une valeur de paramètre d'un paramètre prédéfini à partir d'une information de commande de liaison latérale décodée (S202) ;
lorsque la valeur de paramètre est égale à une première valeur prédéfinie, l'utilisation d'un état de longue distance comme état de distance mis à jour entre le terminal transmetteur et le terminal récepteur (S203) ; et
lorsque la valeur de paramètre est égale à une deuxième valeur prédéfinie, l'utilisation d'un état de courte distance comme état de distance mis à jour entre le terminal transmetteur et le terminal récepteur (S203).

2. Le procédé de retransmission aveugle de données de la revendication 1, **caractérisé en ce que** lorsque l'état de distance mis à jour est l'état de courte distance, le procédé de retransmission aveugle de données (S206) comprend en outre :
la réception d'un résultat de rétroaction de demande de répétition automatique hybride, HARQ, envoyé par le terminal récepteur (S207) ; et
le démarrage du mécanisme de retransmission selon le résultat de rétroaction HARQ (S207).

3. Le procédé de retransmission aveugle de données de la revendication 2, **caractérisé en ce que** le démarrage du mécanisme de retransmission selon le résultat de rétroaction HARQ (S207) comprend :
lorsque le résultat de rétroaction HARQ est un échec de décodage, le démarrage du mécanisme de retransmission ; et
lorsque le résultat de rétroaction HARQ est un succès de décodage, la réalisation d'une transmission de données suivante.

4. Le procédé de retransmission aveugle de données de la revendication 1, **caractérisé en ce que** lorsque l'état de distance mis à jour est l'état de courte distance, le procédé de retransmission aveugle de données (S206) comprend en outre :
l'acquisition du nombre d'occurrences de retransmission des données à envoyer dans un dernier décompte (S208) ;
la mise à jour du nombre d'occurrences de retransmission sur zéro ou le nombre maximal prédéfini d'occurrences (S208) ; et
lorsque le terminal transmetteur est distant du terminal récepteur, le démarrage du mécanisme de retransmission aveugle sur la base d'un nombre mis à jour d'occurrences de retransmission (S208).

5. Le procédé de retransmission aveugle de données de la revendication 1, **caractérisé en ce que** le comptage du nombre d'occurrences de retransmission des données à envoyer (S102) comprend :
la détermination de si les données à envoyer ont terminé une seule retransmission (S204) ; et
si oui, l'acquisition du nombre d'occurrences de retransmission des données à envoyer dans un dernier décompte et l'ajout d'une valeur prédéfinie au nombre d'occurrences de retransmission dans le dernier décompte (S205).

6. Un terminal (200), comprenant :
un processeur (201) ; et
une mémoire (202) connectée électriquement au processeur (201) et configurée pour stocker des instructions et des données ;
dans lequel le processeur (201) est configuré pour réaliser des opérations comprenant : lorsque le terminal transmetteur est distant d'un terminal récepteur, le démarrage d'un mécanisme de retransmission aveugle pour retransmettre des données à envoyer (S101) ;
pendant la retransmission, la mise à jour d'un état de distance entre le terminal transmetteur et le terminal récepteur et le comptage d'un nombre d'occurrences de retransmission des données à envoyer (S102) ; et
la commande d'une retransmission des données à envoyer selon un état de distance mis à jour et le nombre d'occurrences de retransmission (S103) ;
dans lequel le processeur (201) est configuré pour réaliser :
lorsque l'état de distance mis à jour est un état de courte distance, la désactivation du mécanisme de retransmission aveugle (S206) ; et
lorsque l'état de distance mis à jour est un état de longue distance, la détermination de si le nombre d'occurrences de retransmission est inférieur à un nombre maximal prédéfini d'occurrences (S209) ; si oui, le retour à l'exécution des étapes de mise à jour de l'état de distance et de comptage du nombre d'occurrences de retransmission des données à envoyer (S102), si non, la désactivation du mécanisme de retransmission aveugle ;
dans lequel le processeur (201) est configuré pour réaliser :
la réception d'une information de commande de liaison latérale envoyée par le terminal récepteur (S202) ;
le décodage de l'information de commande de liaison latérale et l'extraction d'une valeur de paramètre d'un paramètre prédéfini à partir d'une information de commande de liaison latérale décodée (S202) ;
lorsque la valeur de paramètre est égale à une première valeur prédéfinie, l'utilisation d'un état de longue distance comme état de distance mis à jour entre le terminal transmetteur et le terminal récepteur (S203) ; et
lorsque la valeur de paramètre est égale à une deuxième valeur prédéfinie, l'utilisation d'un état de courte distance comme état de distance mis à jour entre le terminal transmetteur et le terminal récepteur (S203).

7. Le terminal de la revendication 6, **caractérisé en ce que** lorsque l'état de distance mis à jour est l'état de courte distance, le processeur (201) est configuré pour réaliser :
la réception d'un résultat de rétroaction de demande de répétition automatique hybride, HARQ, envoyé par le terminal récepteur (S207) ; et
le démarrage du mécanisme de retransmission selon le résultat de rétroaction HARQ (S207).

8. Le terminal de la revendication 6, **caractérisé en ce que** lorsque l'état de distance mis à jour est l'état de courte distance, le processeur (201) est configuré pour réaliser :
l'acquisition du nombre d'occurrences de retransmission des données à envoyer dans un dernier décompte (S208) ;
la mise à jour du nombre d'occurrences de retransmission sur zéro ou le nombre maximal prédéfini d'occurrences (S208) ; et
lorsque le terminal transmetteur est distant du terminal récepteur, le démarrage du mécanisme de retransmission aveugle sur la base d'un nombre mis à jour d'occurrences de retransmission (S208).

9. Le terminal de la revendication 6, **caractérisé en ce que** le processeur (201) est configuré pour réaliser :
la détermination de si les données à envoyer ont terminé une seule retransmission (S204) ; et
si oui, l'acquisition du nombre d'occurrences de retransmission des données à envoyer dans un dernier décompte, et l'ajout d'une valeur prédéfinie au nombre d'occurrences de retransmission dans le dernier décompte (S205).
